# EUROPEAN PATENT SPECIFICATION

(11) **EP 2 398 954 B1**
(45) Date of publication and mention of the grant of the patent: **16.08.2017**
(21) Application number: 10743977.0
(22) Date of filing: 22.02.2010
(51) Int. Cl.: D06F 58/28, D06F 58/04, D06F 35/00, D06F 37/26

(54) **WASHING MACHINE**
WASCHMASCHINE
MACHINE À LAVER

(30) Priority: 20.02.2009 KR 20090014223
(43) Date of publication of application: 28.12.2011
(73) Proprietor: LG Electronics Inc., Seoul, 07336 (KR)
(72) Inventor: SEO, Bo Sung, Seoul 153-802 (KR); KIM, Keun Joo, Seoul 153-802 (KR); KIM, Jin Woong, Seoul 153-802 (KR); SEO, Hyun Seok, Seoul 153-802 (KR)
(74) Representative: Ter Meer Steinmeister & Partner
(86) International application number: PCT/KR2010/001078
(87) International publication number: WO 2010/095902

(56) References cited:
- WO-A1-2006/027145
- CN-A- 101 328 661
- DE-A1- 4 222 736
- DE-U1- 7 636 794
- FR-A1- 2 738 262
- US-A- 2 619 737
- US-A1- 2004 261 288
- US-A1- 2006 101 871
- US-A1- 2008 223 084

## Description

### Technical Field

The present invention relates to a washing machine.

### Background Art

In general, a drum type washing machine has a tub mounted in a cabinet which forms an exterior of the washing machine for holding washing water. Inside of the tub, there is a drum rotatably mounted in the tub for holding laundry. Since the drum is rotated by a motor, and vibration of the drum is transmitted to the tub, springs, dampers, and balancers are provided to the washing machine for attenuating the vibration.

The tub is suspended from an inside of the cabinet with hanging springs, and the motor is mounted to a rear side of the tub for rotating the drum in the tub. That is, the motor mounted to the rear side of the tub connects the drum to the tub.

In the meantime, a related art drum type washing machine causes the vibration at the drum due to unbalance of weight of the laundry leaned to one side when the drum rotates at a high speed. As the vibration transmits from the drum to the tub, the tub also vibrates.

Consequently, in order to prevent the tub from hitting the cabinet due to vibration of the tub, an adequate gap between an outside circumferential surface of the tub and the cabinet is required. Therefore, as far as a size of the cabinet is not increased, a volume of the tub can not be increased.

It is a recent trend that the consumers prefer a larger capacity of washing for the same size of cabinet. To meet such a user's demand, a washing machine has been developed having a structure in which the tub is connected to the cabinet directly and the vibration does not transmit from the drum to the tub for increasing an effective volume.

In order to secure venting, thereby preventing bad odor, when the related art drum type washing machine is not in use, and in order to open a door for preventing accident caused by negligence of safety, the tub has a venting hole formed therein.
US 2006/101871 A1 discloses a drum type washing and drying machine including a cylindrical rotary drum provided with drum perforations and having a rotating shaft in a horizontal or a slanted direction, a water tub, supported in a main body of the drum type washing and drying machine, for accommodating therein the rotary drum, a dehumidification unit for dehumidifying air exhausted from the rotary drum via the water tub, and a blower-heater path communicating with the dehumidification unit and incorporating therein a blower and a heater. The washing and drying machine is also provided with a circulation path for allowing the blower-heater path and the rotary drum to communicate with each other via the water tub. An opening sealing member is installed at a connection opening between the blower-heater path and circulation path such that the opening sealing member is disposed to be rotable in conjunction with an operation of the blower.
CN 101 328 661 A discloses a drum washing machine which is provided with a ventilating device that communicates the clothes drum with the exterior of the casing, which comprises a casing, a washing barrel which is provided in the casing and used for storing the wash water, a ventilating air passage arranged at one side of the washing barrel and provided with a ventilating hole that communicates the inner part of the washing barrel with an external part and a disc which rotates, opens and closes the ventilating hole.
DE 42 22 736 A1 relates to a drum type washing machine having a venting channel leading from the tub to the detergent box, wherein the opening of the venting channel is provided in front of the opening of the drum and is provided at the gasket connecting the tub and the cabinet. Due venting, it can be prevented that the vibrating assembly is moved forward when the drum rotates at high speed.

### Disclosure of Invention

### Technical Problem

When a drum rotates with a high speed, for example when a spin-drying being performed, due to a flow of air inside a tub, the drum may move forward. Especially, in a drum washing machine having a flexible material connecting a driving unit and the tub, the movement of the drum may be more severe.

It is found by the inventors that the forward-moving may get more severe when air inside the tub flows out through a hole which is located behind an laundry entrance opening of the drum.

### Solution to Problem

An embodiment of a washing machine may include a tub for holding washing water, the tub having a venting portion formed on an circumferential surface, a drum rotatably mounted in the tub, and a blocking member for blocking discharge of air from the tub through the venting portion in spin-drying, namely in spin-drying.

The drum has an opening at a front portion thereof to allow laundry to be entered through.

The venting portion may be located behind the opening of the drum.

The blocking member comes into action when the drum reaches to a preset blocking rotation speed.

The blocking rotation speed is over 400RPM.

The blocking member comes into action when an inside pressure of the tub reaches to a pressure higher than a preset pressure at the time of high speed rotation of the drum.

The inside pressure of the tub is sensed by a pressure sensor mounted to an inside of the tub.

The blocking member includes a pressure valve which is closed at a pressure higher than a specific pressure.

The blocking member includes a check valve member.

The check valve member is of an active control type, according to the present invention.

The check valve member is of a magnet type which opens or closes the venting portion by magnetic force.

The check valve member according to the present invention includes a magnetic force supply portion mounted in the venting portion for supplying magnetic force if the power is supplied to the washing machine, a fixed plate fixed to an inside of the magnetic force supply portion having a central hole, and a movable plate mounted under the fixed plate for moving upward when the magnetic force is supplied to close the central hole.

The check valve member further includes a stopper projected from an underside of the magnetic force supply portion for supporting the movable plate which moves down by gravity when the magnetic force is turned off from an underside of the movable plate.

The venting portion may be formed at a rear of a top side of the tub, or at a center of the top side of the tub.

The venting portion may comprise a plurality of venting portions and the blocking member may comprise a plurality of blocking members corresponding to the plurality of venting portions.

Further, the tub may have a hole in front of the opening of the drum to allow air to flow into the drum through. When the spin-drying is being performed, if air outside the tub flows into the drum, the forward-movement of the drum may be alleviated.

The washing machine may have the tub fixedly mounted thereto, or supported by a flexible supporting structure, like suspension units. Or, the washing machine may be supported in an extent intermediate between the supporting by the suspension and the fixed mounting.

That is, the tub may be supported flexibly in an extent similar to the suspension unit to be described later, or rigidly more than supporting with the suspension. For an example, the tub may be supported by the suspension, or by ones, such as rubber bushings, for providing a certain extent of flexibility to the tub even though the supporting is not flexible more than the suspension.

The tub may have a shape enlarged within a space the tub is mounted therein as far as possible. That is, the tub may be enlarged close to a wall or a frame (for an example, left or right side plates of the cabinet) that limits a left/right direction size of the space at least in left/right directions (a direction perpendicular to a shaft direction of a rotation shaft in a horizontal direction). The tub may be fabricated as one unit with the left or right side wall of the cabinet. Relatively, the tub may be formed closer to the wall or the frame than the drum in the left/right directions. For an example, the tub may be formed to be spaced from the wall or the frame less than 1.5 times of a space to the drum. In a state the tub is expanded in the left/right directions thus, the drum also may be enlarged in the left/right directions. The smaller left/right direction spaces between the tub and the drum, the drum may be enlarged the more. In reducing the left/right direction spaces of the tub and the drum, left/right direction vibration of the drum may be taken into account. The smaller the left/right direction vibration of the drum, a diameter of the drum may be the greater. Therefore, the suspension unit which dampens the vibration of the drum may be made to have left/right direction rigidity greater than other direction rigidity. For an example, the suspension unit may be made to have rigidity with respect to a left/right direction deformation the greatest compared to rigidity in other directions.

Different from the related art, the suspension unit may be directly connected to the bearing housing which supports the rotation shaft connected to the drum, without passed through the tub. In this instance, the suspension unit may include a bracket extended in a shaft direction of the rotation shaft. And, the bracket may be extended forward toward the door.

The tub may have a rear opening. A driving unit including the rotation shaft, the bearing gousing, and the motor may be connected to the tub through a flexible member. The flexible member may be made to seal such that water does not leak through the rear opening of the tub, and to enable the driving unit to move relative to the tub. The flexible member may be of any material as far as the material may function as a sealing and is flexible, for an example, flexible member may be formed of a gasket material like the front gasket. In this case, for convenience's sake, the flexible member may be called as a rear gasket with reference to the front gasket. The rear gasket may be connected to the driving unit in a state the rear gasket is limited not to rotate at least in a rotation direction of the rotation shaft. A portion of the driving unit positioned in front of a connection portion to the rear gasket so as to be vulnerable to exposure to the washing water in the tub may be made not to be in direct contact with the washing water. For an example, the portion may be coated, or a front surface thereof may be covered with an additional component of plastic. By making parts of the driving unit formed of metal not to be direct exposure to the water, the parts may be prevented from corrosion.

Along with this, different from the embodiment, the cabinet may not be included to the washing machine. For an example, in a case of a built-in washing machine, a space the washing machine is to be installed therein may be porvided, not by the cabinet, but by a wall structure. That is, the washing machine may be fabricated in a shape which does not include the cabinet which forms an exterior, independently. However, in this case too, the front frame may be required for a front exterior.

### Advantageous Effects of Invention

The present invention has following advantageous effects.

The washing machine can secure venting capability when the washing machine is not in use for improving odor discharge and venting capability.

The washing machine can reduce a forward-movement of the drum when the drum rotates at a high speed.

### Brief Description of Drawings

The accompanying drawings, which are included to provide further understanding of the disclosure and are incorporated in and constitute a part of this application, illustrate embodiments of the disclosure and together with the description serve to explain the principle of the disclosure.

In the drawings:

FIG. 1 illustrates a section of a washing machine in accordance with another preferred embodiment of the present invention;
FIG. 2 illustrates a perspective view of the tub and the drum in FIG. 1;
FIG. 3 illustrates an enlarged perspective view of the A part in FIG. 2;
FIG. 4 illustrates a section across a line A-A'in FIG. 3;
FIG. 5 illustrates an operational diagram showing an operation state of the check valve member in FIG. 2;
FIGS. 6 and 7 illustrate diagrams respectively showing other manual control types of the check valve members, which do not fall under the scope of the claimed invention, schematically;
FIG. 8 illustrates a diagram showing an exemplary active control type of the check valve members, which do not fall under the scope of the claimed invention,
   schematically; and
FIGS. 9 and 10 illustrate diagrams respectively showing active control types of the check valve members in accordance with the present invention, schematically.
FIG. 11 illustrates an exploded perspective view of a washing machine in accordance with a preferred embodiment of the present invention;
FIGS. 12 and 13 illustrate perspective views each showing a tubfront of a washing machine in accordance with a preferred embodiment of the present invention;
FIG. 14 illustrates a rear perspective view of a tubrear of a washing machine in accordance with a preferred embodiment of the present invention;
FIG. 15 illustrates a perspective view of a suspension of a washing machine in accordance with a preferred embodiment of the present invention;
FIG. 16 illustrates a side view showing coupling of a suspension to a tub of a washing machine in accordance with a preferred embodiment of the present invention;

### Best Mode for Carrying out the Invention

Reference will now be made in detail to the specific embodiments of the present invention, examples of which are illustrated in the accompanying drawings. Wherever possible, the same reference numbers will be used throughout the drawings to refer to the same or like parts.

The present invention will be described taking a washing machine having a tub rigidly connected to a cabinet as one embodiment of the present invention. However, the present invention is not limited to such a washing machine, but applicable to all drum type of washing machines.

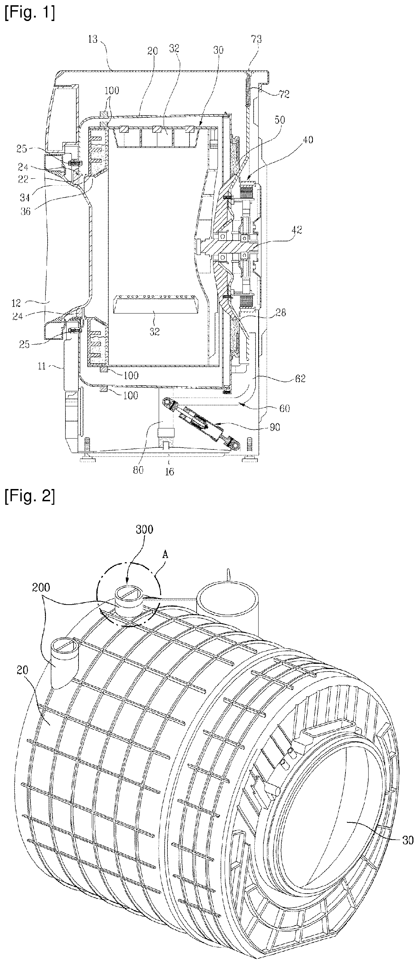

A washing machine in accordance with a preferred embodiment of the present invention will be described with reference to FIGS. 1 to 10.

Referring to FIGS. 1 and 2, the washing machine of the present invention improves odor discharge and venting capability by securing venting means when the washing machine is not in use.

Referring to FIG. 1, the washing machine includes a cabinet 10 which forms an exterior of the washing machine, a tub 20 in the cabinet 10 directly connected thereto, and a drum 30 rotatably mounted in the tub 20. Mounted in rear of the tub 20, there are a motor 40 for rotating the drum 30, and a bearing housing 28 which is a rear side of the tub 20 and supports a shaft 42 that supports the motor 40. Mounted between the bearing housing 28 and the tub 20, there is damping means 50 for sealing an inside of the tub 20 and damping vibration or impact transmitting from the motor 40 to the tub 20. Also mounted also between the bearing housing 28 and the tub 20, there is a suspension assembly 60 for supporting the drum 30 and damping the vibration or impact transmitting to the bearing housing 28.

The cabinet 10 has a door 12 mounted to a front 11 thereof, and a base 16 fixedly secured to an underside thereof. The cabinet 10 also may have a top bracket 73 at an upper side 13 for securing an elastic member 72 for suspending the bearing housing 28.

The tub 20 is directly fixed to an inside of the cabinet 10. Preferably, the tub 20 and the cabinet 10 may be fixed as a side of the tub 20 facing the door 12 is fastened to an inside of the front 11 of the cabinet 10 with screws 25. Of course, a side or a rear of the tub 20 may be fastened to the cabinet 10.

The bearing housing 28 is fixedly mounted to a rear side of the tub 20. The bearing housing 28 has bearings (not shown) mounted thereto for smooth rotation of the motor shaft 42, and the motor shaft 42 is supported on the bearings.

The motor 40 is coupled to a rear of the bearing housing 28, and the motor shaft 42 is passed through the bearing housing 28 and fixedly secured to the rear side of the drum 30.

In the meantime, the suspension assembly 60 includes a damper bracket 62 coupled to the bearing housing 28, and a damping unit coupled to the damper bracket 62 for supporting the bearing housing 28.

The damping unit includes a main damper 80 for supporting weight of the drum 30 and damping vertical direction vibration, and a sub-damper 90 for damping horizontal direction vibration of the drum 30.

The drum 30 and the bearing housing 28 are lifted up and supported by the damping unit having the main damper 80 and the sub-damper 90.

Thus, since the tub 20 is directly fixed to the cabinet, and the vibration does not transmit from the drum 30 to the tub 20, a diameter of the tub 20 can be made greater than the related art washing machine. Eventually, the washing machine of the present invention has an effect of expanding effective volumes of the tub 20 and the drum 30.

Since the tub 20 is fixed to the cabinet, if the vibration or impact is transmitted to the tub 20 fixed to the cabinet as one body, not only the tub 20 itself shakes. Because weight of the cabinet is added to the tub 20, rigidity of the tub 20 increases, allowing to expect improvement of an effect of an overall vibration characteristic of the washing machine.

Moreover, since the drum 30 rotating thus is supported only on one side, the inside volume of the drum 30 can be expanded further than a type of the drum 30 which is supported on both sides. Accordingly, since a number of components can be reduced as many, improvement of productivity can be expected.

The related art washing machine has one venting hole formed in the tub for preventing bad odor from generating and opening of the door for prevention of accident caused by negligence of safety. However, if the venting hole is in an opened position at the time the drum rotates at a high speed for spin-drying, the drum moves toward a front of the tub to hit the tub.

Above problem is liable to cause in a structure in which the tub is connected to the drum with a flexible material, such as the rear gasket, separating the tub and the drum from each other with respect to vibration. At the time the drum rotates at a high speed, pressure imbalance takes place around the drum in the tub, making the drum to move toward the front of the tub. Therefore, the forward movement of the drum takes place at the time of spin-drying when the drum rotates at the high speed.

The forward movement of the drum 30 causes a problem in which wear down of the door gasket (not shown) which is mounted for preventing foreign matters from entering between the tub 20 and the drum 30 becomes great. Moreover, if the drum 30 holds a large amount of the laundry, making the drum 30 to move forward, the drum 30 at a front thereof is liable to hit the tub 20.

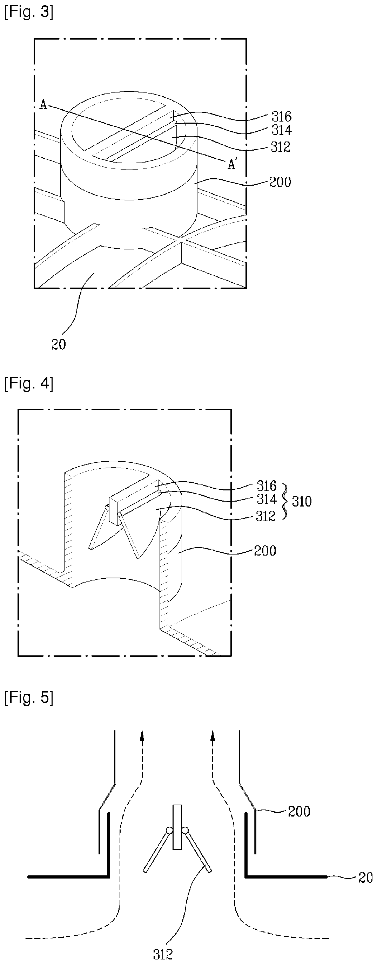

Referring to FIGS. 2 and 3, in order to solve this problem, the venting portion includes one (a first venting portion) at a front side of a top side of the tub 20, and at least one (a second venting portion) at a rear side of the top side of the tub 20. The first venting portion is located in front of an laundry entrance opening of the drum, and the second venting portion 200 is located behind of the laundry entrance opening. The first venting portion is kept open while a spin-drying is performed. Through the first venting portion, air outside the tub can flow into the drum. This air flow is found to help to reduce the forward-movement of the drum.

The second venting portion 200 formed at the rear side of the top side of the tub 20 may have one leaned to a side, and another one at a center of the rear side of the top side. As far as the second venting portion 200 is positioned in the rear side, the second venting portion 200 can be formed regardless of an actual formation position.

The second venting portion 200 is cylindrical and projected from an outside circumference of the tub 20 for making the inside of the tub 20 to be in communication with an outside thereof. When the washing machine is not in use, the air is vented through the second venting portion 200, thereby discharging odor from the tub 20 and venting required for opening of the door.

To reduce the forward-movement of the drum, it is better if the second venting portion 200 is closed such that air inside the tub is not flown out therethrough during spin-drying. Also, in washing, it is better to block the discharge of steam or detergent foam through the second venting portion 200.

In order to block the second venting portion 200 in spin-drying for preventing the air from being discharged to an outside of the tub 20, a block member may be mounted to the second venting portion 200.

At the time the drum 30 rotates at a high speed, if the second venting portion 200 is blocked, pressures inside and outside of the tub 20 become the same because the air introduced through the first venting portion 201 and no air is discharged through the second venting portion 200. Therefore, at the time the drum rotates at the high speed, the forward movement of the drum 30 caused by an inside pressure difference can be reduced or prevented.

Owing to this reason, the washing machine in accordance with the preferred embodiment of the present invention can solve the problem of the forward movement of the drum 30 toward the front of the cabinet 10 at the time of high speed rotation of the drum 30. Together with this, the discharge of detergent foam or steam can be blocked in washing while securing venting when the washing machine is not in use. As one example of the blocking member, a check valve member 300 is used.

Referring to FIGS. 3 to 10, in the check valve member 300, there may be two kinds of types, i.e., a passive control type and an active control type, whereby only the active control type falls within the scope of the present invention.

In the embodiment, the passive control is defined as controlling of operation of the check valve member 300 by a direct pressure difference generated when the detergent foam or steam (in a case of the washing and drying machine) rises to escape through the second venting portion 200 or the drum 30 rotates at the high speed.

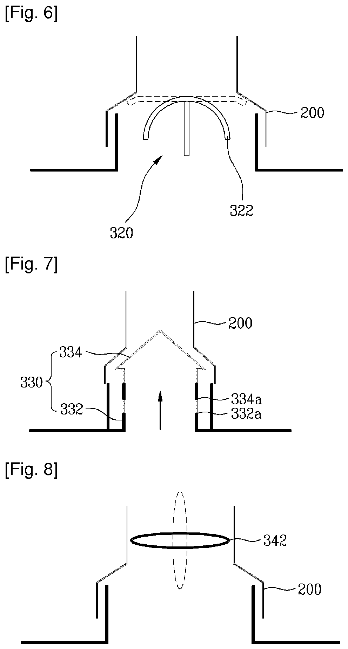

In the check valve member 300 of the passive control type, there are a flapper type as shown in FIGS. 3 to 5, or a shape memory alloy type as shown in FIG. 6, or a floating type as shown in FIG. 7.

Referring to FIG. 3 to 5, the check valve member 310 of the flapper type has thin plate flappers 312 rotatably fastened to respective rotation shafts 314 which are fixed to an inside of the second venting portion 200 by a shaft supporting portion 316.

The flapper 312 is rotatably mounted to the inside of the second venting portion 200. The flapper 312 swings upward by a pressure difference of the detergent foam or the steam rising thus to close the inside of the second venting portion 200.

If the pressure difference is removed, the flapper 312 returns to an original position by gravity to open the second venting portion 200. According to this, the flapper 312 can prevent the air, the detergent foam or the steam from discharging to the outside of the tub 20 when the washing machine is in operation, and permits the air to vent as shown in FIG. 5 when the washing machine is not in operation.

Referring to FIG. 6, the check valve member 320 of the shape memory alloy type has a blocking portion 322 of a shape memory alloy unfolded by a steam temperature when the air or the steam is discharged through the second venting portion 200 to close the inside of the second venting portion 200.

The blocking portion 322 may be formed of any shape memory alloy as far as the shape memory alloy can respond to the steam temperature being discharged from the washing and drying machine. When the pressure difference is removed, the steam generation stops, or a temperature of a second venting portion 200 side drops to a certain extent, the blocking portion 322 returns to an original shape to open the second venting portion 200.

Or, the check valve member 320 of the shape memory alloy type may be applied to the second venting portion 200 positioned on the front side of the tub 20. In this case, the second venting portion 200 is kept open to allow introduction of the air into the tub 20 in general except when the steam discharges. It can be made that the second venting portion 200 is closed only when the steam discharges.

Referring to FIG. 7, the floating check valve member 330 includes a supporting portion 332 having an opening 332a in a side surface for venting the air, and a floating portion 334 movably mounted to the supporting portion 332 having an opening 334a to be in communication with the side surface opening 332a.

The supporting portion 332 has a structure in which the supporting portion 332 closes an inside of the second venting portion 200 in a state the supporting portion 332 is coupled to the floating portion 334. However, since the side surface opening 332a of the supporting portion 332 and the opening 334a in the floating portion 334 are in communication, the air can vent through the side surface opening 332a and the opening 334a when the washing machine is not in use.

If the detergent foam or the steam is generated as the washing machine is in operation or the pressure difference is generated by the high speed rotation of the drum 30, the pressure difference moves up the floating portion 334 from the supporting portion 332. If the floating portion 334 moves up from the supporting portion 332, making the side surface opening 332a and the opening 334a are out of alignment, the inside of the second venting portion 200 is closed. Accordingly, the discharge of the air, the detergent foam or the steam to the outside of the tub 20 through the second venting portion 200 can be prevented at the time the drum 30 rotates at the high speed.

If the pressure difference is removed, the floating portion 334 returns to an original position by gravity. Accordingly, the side surface opening 332a and the opening 334a are aligned, to form a passage which allows venting of the air.

Thus, if the manual control type check valve member 300 is applied, at the same time with the closure of the second venting portion 200, the inside of the tub 20 is closed from the outside of the tub 20. Therefore, since no pressure difference is formed between the tub 20 and the drum 30 even if the drum 30 rotates, the forward movement of the drum 30 by the pressure difference can be prevented.

And, the discharge of the detergent foam or the steam during operation of the washing machine can also be prevented.

In the embodiment, the active control is defined as one in which power is supplied artificially for controlling operation of the check valve member 300 to prevent the air, the detergent foam or the steam from escaping through the second venting portion 200 during the power is supplied.

That is, during supply of the power, the check valve member 300 is operated to close the second venting portion 200, and if the supply of the power stops, the check valve member 300 opens the second venting portion 200, allowing venting of the air.

The active control type check valve member 300 has efficiency better than the manual control type in which the check valve member 300 is operated by an inside pressure difference generated when the drum 30 rotates, or by the steam or the detergent foam.

This is because the check valve member 300 can be operated within a time period shorter than the manual control type owing to the power supply, and can close the venting portion 200 more positively.

Since the inside of the tub 20 is closed at the same time with the closure of the second venting portion 200, generating no pressure difference between the tub 20 and the drum 30 even if the drum 30 rotates, the forward movement of the drum 30 caused by the pressure difference can be prevented.

Referring to FIGS. 8 to 10, as the active control type check valve member 300, according to the present invention a magnet type is used.

Referring to FIG. 8, the magnet type check valve member 340 includes a rotation holding portion 342. If power is supplied to the washing machine, the rotation holding portion 342 closes the second venting portion 200, and if the power is turned off, the rotation holding portion 342 turns to open the second venting portion 200. Since a structure for supplying a magnet force by using the power is similar to the embodiment described later, detailed description of the structure will be omitted.

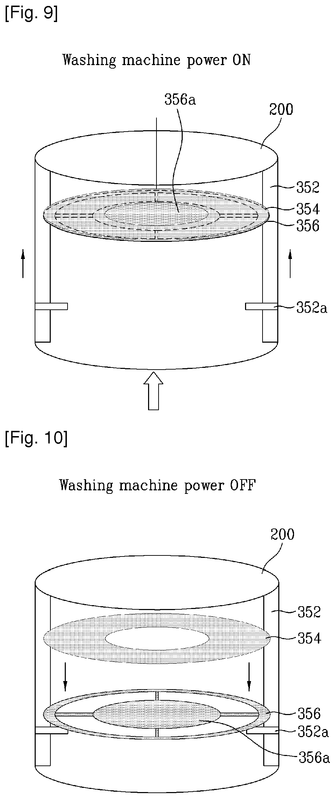

The magnet type check valve member 300 shown in FIGS. 9 and 10 is a type which opens or closes the second venting portion 200 by a magnetic force.

Referring to FIG. 10, the magnet type check valve member 300 includes a magnetic force supply portion 352 for supplying a magnetic force if the power is supplied to the washing machine, a fixed plate 354 fixed to an inside of the magnetic force supply portion 352, and a movable plate 356 under the fixed plate 354 for opening/closing the second venting portion 200. Under the magnetic force supply portion 352, there is a stopper 352a.

The magnetic force supply portion 352 is mounted in the second venting portion 200. The magnetic force supply portion 352 is an electric magnet which supplies a magnetic force if the power is supplied to the washing machine, and turns off the magnetic force if the power is turned off. The fixed plate 354 is fixed to an upper side of the magnetic force supply portion 352, and the movable plate 356 moves within a space between an underside of the magnetic force supply portion 352 and the fixed plate 354.

The fixed plate 354 is an annular plate with a central hole to close the inside of the second venting portion 200 except the central hole portion. If the movable plate 356 couples to the fixed plate 354, the central hole is closed to close the second venting portion completely, and the movable place 356 moves away from the fixed plate 354, the second venting portion 200 is opened.

The movable plate 356 moves up/down between an upper side of the stopper 352a and the fixed plate 354 by the magnetic force, and has a central closure 356a for closing the central hole when the movable plate 356 moves up by the magnetic force supplied thus. If the magnetic force is supplied to the movable plate 356, the movable plate 356 moves up by an attraction force between the movable plate 356 and the fixed plate 354 unit the movable plate 356 is brought into close contact to the fixed plate 352a.

That is, referring to FIG. 9, since the movable plate 356 has the magnetic force supplied thereto during the washing machine is in operation, the movable plate 356 is kept a state in which the movable plate 356 is in close contact with the underside of the fixed plate 354. As shown in FIG. 10, if the power to the washing machine is turned off, the movable plate 356 moves down to maintain a state in which the movable plate 356 is spaced from the fixed plate 354. The air pressure generated at the time of spin-drying acts favorably in coupling of the movable plate 356 to the fixed plate 354, making the two plates 356 and 354 to be in close contact with each other, positively.

It is preferable that the central closure 356a has a size slightly greater than the central hole such that the detergent foam or the steam can not escape through the central hole in the fixed plate 354 when the movable plate 356 is in close contact with the fixed plate 354. According to this, when the movable plate 356 is in close contact with the fixed plate 354, the central hole is closed completely to close the second venting portion 200.

If the movable plate 356 moves down to open the central hole in the fixed plate 354, venting capability of the tub 20 can be secured.

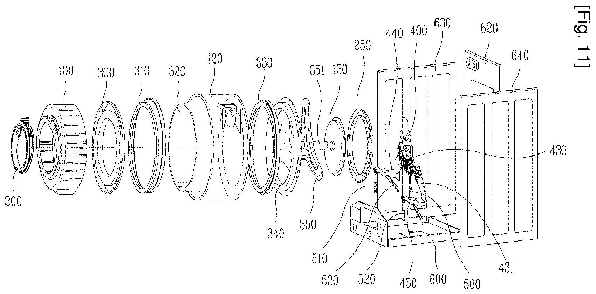

The venting portion described before is able to apply the washing machine which will be described, with reference to FIGS. 11 to 16.

FIG. 11
illustrates an exploded perspective view of a washing machine in accordance with a preferred embodiment of the present invention.

Referring to FIG. 11, the washing machine has a tub fixedly secured to a cabinet. The tub includes a tubfront 100 which forms a front portion thereof and a tubrear 120 which forms a rear portion thereof. The tubfront 100 and the tubrear 120 are fastened together with screws for forming a space for placing a drum therein. The tub also includes a tubback 130 which forms a rear surface thereof. The tubback 130 is connected to the tubrear 120 with a rear gasket 250. The rear gasket 250 is formed of elastic material for preventing vibration from transmitting to the tubrear 120 from the tubback 130.

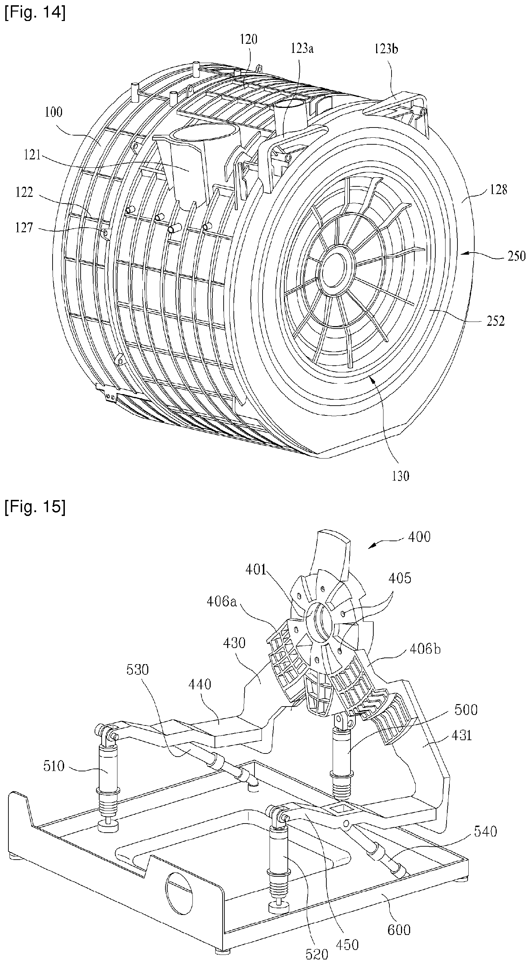

The tubrear 120 has a rear surface 128. The rear surface 128 of the tubrear 120, the tubback 130, and the rear gasket 250 form a rear wall surface of the tub. The rear gasket 250 is sealably connected to the tubback 130 and the tubrear 120 respectively for preventing the washing water from leaking from the tub. The tubback 130 vibrates together with the drum when the drum rotates. In order to prevent the tubback 130 from interfering with the tubrear 120 at the time the tubback 130 vibrates, the tubback 130 is spaced from the tubrear 120, adequately. Since the rear gasket 250 is formed of elastic material, the rear gasket 250 allows the tubback 130 to make relative motion without interference with the tubrear 120. The rear gasket 250 may have a corrugated portion 252 (See FIG. 14) which can be extended adequately for allowing the relative motion of the tubback 130.

A foreign matter getting in preventive member 200 is connected to a front of the tubfront 100 for preventing foreign matters from entering between the tub and the drum. The foreign matter getting in preventive member 200 is formed of an elastic material, and fixedly mounted to the tubfront 100. The foreign matter getting in preventive member 200 may be formed of a material the same with the rear gasket 250.

The drum includes a drumfront 300, a drumcenter 320, and a drumback 340. Ball balancers 310 and 330 are mounted to a front portion and a rear portion of the drum, respectively. The drumback 340 is connected to a spider 350, and the spider 350 is connected to a rotation shaft 351.

The drum rotates in the tub by rotation force transmitted through the rotation shaft 351.

The rotation shaft 351 is passed through the tubback 130 and connected to the motor, directly. In detail, a rotor of the motor and the rotation shaft 351 are connected, directly. There is a bearing housing 400 coupled to the rear surface 128 of the tubback 130. The bearing housing 400 rotatably supports the rotation shaft 351 between the motor and the tubback 130.

A stator is fixedly mounted to the bearing housing 400. The rotor is positioned around the stator. As described before, the rotor is directly connected to the rotation shaft 351. The motor, being an outer rotor type motor, is connected to the rotation shaft 351, directly.

The bearing housing 400 is supported on a cabinet base 600 through a suspension unit. The suspension unit includes three vertical suspensions and two tilted suspensions for supporting in front/rear directions in tilted positions. The suspension unit is connected to the cabinet base 600, not fixedly perfectly, but to allow a certain extent of elastic deformation to allow the drum to move in front/rear and left/right directions.

That is, the suspension unit is elastically secured to allow a certain extent of rotation of the suspension unit in front/rear and left/right directions with respect to a securing point at which the suspension unit is connected to the base. In order to make such elastic securing, the vertical suspensions may be mounted to the base 600 with rubber bushings disposed therebetween, respectively.

Of the suspensions, it can be configured that the vertical suspensions elastically buffer vibration or the drum, and the tilted suspensions dampens the vibration. That is, it can be configured that, of a vibration system having springs and damping means, ones mounted in vertical positions serve as a spring and ones mounted in tilted positions serve as damping means.

The tub is fixedly mounted to the cabinet except the tubback 130, and the vibration of the drum is buffered and supported by the suspension unit. It can be said that supporting structures for the tub and the drum are separated from each other actually, such that the tub does not vibrate even if the drum vibrates.

Respective parts will be described in detail.

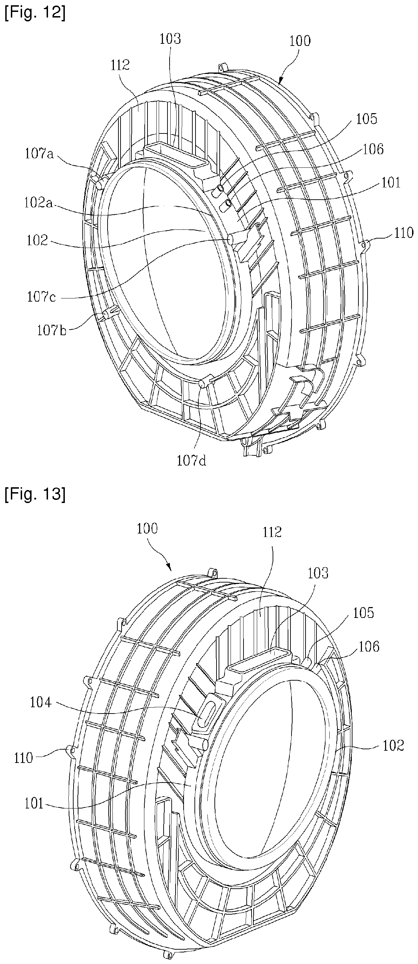

FIGS. 12 and 13 disclose the tubfront 100. The tubfront 100 has a donut shaped vertical front surface at a front side of a cylindrical surface which is a portion of a sidewall of the tub. A rear side of the cylindrical surface is opened, and has a plurality of fastening holes 110. The fastening holes 110 are fastened to fastening holes 127 (See FIG. 14) in the tubrear 120 matched thereto, respectively.

A rim portion 101 is extended forward from an inside circumferential surface of a front surface of the tubfront 100. The rim portion 101 has a width which becomes the smaller at the rim portion 101 goes from an upper side to a lower side the more. At a lower side of a lower edge of the front surface, there may not be the rim portion 101 formed thereon, actually.

The rim portion 101 has a water supply hole 104, a hot air inlet 103 to be used for drying, a circulating water inlet 106 for inlet of washing water circulated by a circulating pump, and a steam inlet 105 for introduction of steam.

Since the washing machine of the present invention has vibration of the tub reduced significantly, connection of a water supply structure, such as the water supply hose for supplying washing water, a structure for drying, such as drying duct, a structure for supplying steam, a structure for supplying the circulating water, and so on can be held in position, securely.

The hot air inlet 103 is an upward rectangular shaped extension from the rim portion 101, substantially. The hot air inlet 103 is required for a washing and drying machine, and may not be required for a washing machine which has no drying function.

Since the water supply hole 104 and so on are formed in the front portion of the tubfront 100, supply of the washing water and so on are made at the front side of the tub.

The water supply hole 104 and so on can be positioned in front of a front end of the drum which is housed in the tub. Accordingly, the washing water and so on can be introduced to the drum directly through a drum opening provided for laundry in/out. Since fluids which are supplied for treating the laundry, such as the washing water and so on, can be introduced to the drum directly, effective treatment of the laundry is possible. Moreover, in a case detergent is supplied together with the washing water which is supplied through detergent box (not shown), if the detergent is introduced to the drum directly, consumption of the detergent can be reduced, enabling to reduce an amount of the washing water, accordingly. And, a problem of contamination of a bottom of the tub by deposition of detergent sediments can be reduced. Furthermore, the water supply from the front of the tub can have an effect of washing door glass (not shown).

Even if the hot air is supplied from the front of the tub, if the hot air is supplied through a vertical surface of the tubfront 100, since a flow of the hot air undergoes two times of bending to form a'⊂'shape (a'⊂'shaped complicate flow is formed as the hot air introduced into the tub is bent downward at a front of the tub and bent forward of the tub again), the flow of the hot air can be poor. However, if the hot air inlet 103 is formed in the rim portion 101 of the tubfront 100, the flow of the hot air can be smooth since the hot air flow is required to bend only once, vertically.

The water supply holes 104 and so on are positioned above a center point of the drum. The washing water and so on are supplied to the drum from an upper side of the front of the drum. If, different from this, it is required to supply the washing water and so on to the drum from a lower side of the front of the drum, the rim portion 101 of the tubfront 100 can be formed at the lower side of the front surface, accordingly. If it is required to supply the washing water and so on to the drum, not from the upper or lower side, but from a left or right side of the front of the drum, the rim portion 101 of the tubfront 100 can be formed in the vicinity of a center portion 131 of an inside edge of the front surface, accordingly. That is, a shape of the rim portion 101 can vary with a direction of supply of the fluids.

In a front edge of the rim portion 101, there is a coupling portion 102 for coupling the foreign matter getting in preventive member 200 thereto. The coupling portion 102 is a forward extension from a front end of the rim portion 101 to form a small cylindrical surface, substantially. The small cylindrical surface has a rib 102a formed on an outside circumferential surface.

The foreign matter getting in preventive member 200 is coupled to the coupling portion 102 as the coupling portion 102 is placed in the foreign matter getting in preventive member 200. Accordingly, the foreign matter getting in preventive member 200 has a groove (not shown) for placing the small cylindrical surface having the rib 102a therein.

The tubfront 100 is fixedly connected to the cabinet front (not shown). For this fixed connection of the tubfront 100, fastening bosses 107a, 107b, 107c and 107d are formed on the front surface of the tubfront 100 to surround the rim portion 101, substantially. After positioning the cabinet front (not shown) in a state the tubfront 100 is mounted, the cabinet front (not shown) is fastened to the tubfront 100 by fastening screws in a rear direction.

The steam inlet 105 can be connected to a steam hose. The steam inlet 105 has a steam guide 105a for guiding the steam introduced thereto to an inside of the drum. The circulating water inlet 106 has a circulating water guide 106a for guiding the circulating water introduced to the circulating water inlet 106 to the inside of the drum. The steam inlet 105, the circulating water inlet 106, the steam guide 105a and the circulating water guide 106a are formed as one unit with the tubfront 100. The tubfront 100 of plastic is injection molded together with the steam inlet 105 and so on as portions of the tubfront 100.

The tubfront 100 is coupled to the tubrear 120 to form a space for housing the drum. The tubfront 100 and the tubrear 120 are fastened with screws. For this screw fastening, the tubfront 100 has a plurality of screw fastening holes 110 formed along a circumference of a rear portion thereof.

FIG. 14 illustrates the tubfront 100, the tubrear 120, the tubback 130, and the rear gasket 250 assembled together.

The tubrear 120 is cylindrical to surround the drum, and has an opened front and the donut shaped rear surface 128. The front is sealably coupled to the tubfront 100. The rear surface 128 of the tubrear 120 has a diameter adequately greater than the outside diameter of the tubback 130, so that a gap enough to prevent the tubback 130 from interfering with the rear surface 128 of the tubrear 120 even if the tubback 130 vibrates. In the gap, i.e., between the rear surface 128 of the tubrear 120 and the tubback 130, there is the rear gasket 250 connected. The rear gasket 250 seals between the rear surface 128 of the tubrear 120 and the tubback 130. The rear gasket 250 has a corrugated portion 252 having an adequate elasticity for not interfering with the vibration of the tubback 130.

The tubrear 120 has a hot air outlet 121 on one side for the washing and drying machine. It is natural that the hot air outlet 121 is not required if the washing machine is not the washing and drying machine, but a washing machine only for washing.

In the meantime, under the tubfront 100 and the tubrear 120, there is an additional structure for fixedly securing the tub to the base.

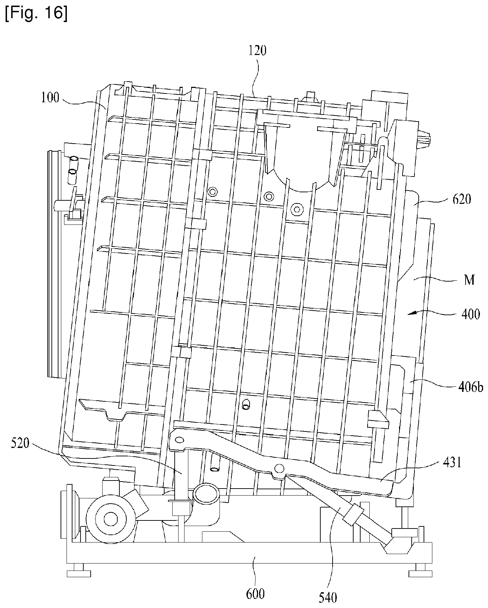

FIG. 15 illustrates the suspension unit mounted on the base 600. FIG. 16 illustrates assembly of the tub 100 and 120, the bearing housing 400, and the suspension unit.

The suspension unit includes the bearing housing 400, a first weight 431, a second weight 430, a first suspension bracket 450, and a second suspension bracket 440.

The bearing housing 400 has a rotation shaft hole 401 at a center for passing the rotation shaft 351. The rotation shaft hole 401 have one pair of bearings 404 placed in a front end and a rear end thereof, respectively. The rotation shaft 351 is rotatably supported by the bearings 404.

The rotation shaft hole 401 has a plurality of tubback fastening holes 405 formed around the rotation shaft hole 401 matched to the pass through holes in the tubback 130. In rear of the bearing housing 400, there is a motor mounting portion (not shown).

The bearing housing 400 is coupled to the tubback 130 with additional fastening bodies which pass through the pass through holes 405. Between the bearing housing 400 and the tubback 130 coupled thus, there is a water seal for maintaining sealing between the bearing housing 400 and the tubback.

Extended in a radial direction of left and right directions from the bearing housing 400, there are a first extension 406a and a second extension 406b. The first extension 406a and the second extension 406b have the first weight 431 and the second weight 430 connected thereto, respectively. The first weight 431 and the second weight 430 have the first suspension bracket 450 and the second suspension bracket 440 connected thereto, respectively.

The first extension 406a and the second extension 406b, the first weight 431 and the second weight 430, and the first suspension bracket 450 and the second suspension bracket 440 are symmetry to each other, respectively. The first and second weights 431 and 430 serve as balancer in a case the drum holds laundry, and mass in a vibration system in which the drum vibrates.

The suspension unit can include vertical suspensions for buffering in a vertical direction and front/rear direction suspensions for buffering in front/rear directions. One of the vertical suspensions can be arranged on a rear side of the base, and two of the vertical suspensions can be arranged on a front side of the base on left and right sides of a center of the base, respectively. Two suspensions can be arranged on left and right sides tilted in a front/rear direction.

The suspension unit can include a first cylinder spring 520, a second cylinder spring 510, a third cylinder spring 500, a first cylinder damper 540, and a second cylinder damper 530.

The cylinder spring is mounted between a cylinder and a piston. Owing to the cylinder and the piston, a length of the cylinder spring makes stable variation at the time of buffering. The cylinder is connected to the suspension bracket and the piston is connected to the base. A cylinder damper provides a damping effect owing to friction caused as the piston moves in the cylinder.

The first cylinder spring 520 is connected between the first suspension bracket 450 and the base 600. The second cylinder spring 510 is connected between the second suspension bracket 440 and the base 600. The third cylinder spring 500 is connected between the bearing housing 400 and the base 600, directly. The cylinder springs buffer and support at one point on the rear side and two points on the left and right sides of the front side.

The first cylinder damper 540 is mounted tilted between the first suspension bracket 450 and the rear side of the base, and the second cylinder damper 530 is mounted tilted between the second suspension bracket 440 and the rear side of the base.

The third cylinder spring 500 is arranged at a center of the rear side, and the first cylinder spring 520 and the second cylinder spring 510 are arranged on left and right sides of the front side, respectively. The first cylinder damper 540 and the second cylinder damper 530 are positioned between a rear side of the third cylinder spring 500 and a front side of the first cylinder spring 520 and the second cylinder spring 510. Those are symmetry in left/right directions. The cylinder springs are connected to the base 600 with rubber bushings disposed therebetween, respectively. It will be apparent to those skilled in the art that various modifications and variations can be made in the present invention without departing from the scope of the invention. Thus, it is intended that the present invention cover the modifications and variations of this invention provided they come within the scope of the appended claims.

## Claims

1. A washing machine comprising:
a drum (30) having an opening at a front portion thereof to allow laundry to be entered through;
a tub (20) in which the drum (30) is rotatably placed and water for washing is held,
at least one venting portion (200) on a circumferential surface of the tub (20) behind the opening of the drum (30); and
a blocking member (300, 310, 320, 330, 340) for blocking discharge of air from the tub (20) through the venting portion when a spin-drying is performed, wherein the blocking member includes a check valve member (300) of an active control type, and the check valve member (300) is of a magnet type which opens or closes the venting portion (200) by magnetic force, **characterised in that** the check valve member (300) includes:
a magnetic force supply portion (352) mounted in the venting portion (200) for supplying magnetic force if the power is supplied to the washing machine,
a fixed plate (354) fixed to an inside of the magnetic force supply portion (352) having a central hole, and
a movable plate (356) mounted under the fixed plate (354) for moving upward when the magnetic force is supplied to close the central hole.

2. The washing machine as claimed in claim 1, wherein the blocking member (300, 310, 320, 330, 340) is configured to block the discharge when the drum (30) reaches to a preset rotation speed.

3. The washing machine as claimed in claim 1, wherein the blocking member (300, 310, 320, 330, 340) is configured to block the discharge when an inside pressure of the tub (20) reaches a pressure higher than a preset pressure at the time of high speed rotation of the drum (30).

4. The washing machine as claimed in claim 1, further comprising another venting portion (201) located at a front side of a top side of the tub (20) in front of the opening of the drum (30) to allow air to flow into the drum (30) when the spin-drying is performed.

5. The washing machine as claimed in claim 1, wherein the check valve member (300) further includes a stopper (352a) projected from an underside of the magnetic force supply portion (352) for supporting the movable plate (356) which moves down by gravity when the magnetic force is turned off from an underside of the movable plate (356).

6. The washing machine as claimed in claim 1, further comprising:
a driving unit including a rotation shaft (351), a bearing housing (400) for rotatably supporting the rotation shaft (351), and a motor for rotating the rotation shaft (351), and
a flexible material (250) to prevent the water inside the tub (20) from leaking toward the driving unit and allow the driving unit to move relatively to the tub (20).

7. The washing machine as claimed in claim 1, further comprising:
a driving unit including a rotation shaft (351), a bearing housing (400) for rotatably supporting the rotation shaft (351), and a motor for rotating the rotation shaft (351), and
a suspension unit attached to the bearing housing (400) for reducing vibration of the drum (30).

## Patentansprüche

1. Waschmaschine, die Folgendes umfasst:
eine Trommel (30), die in einem vorderen Abschnitt eine Öffnung aufweist, durch die Wäsche hineingegeben werden kann;
einen Bottich (20), in dem die Trommel (30) drehbar angeordnet ist und Wasser zum Waschen enthalten ist,
wenigstens einen Belüftungsabschnitt (200) an einer Umfangsfläche des Bottichs (20) hinter der Öffnung der Trommel (30); und
ein Blockierelement (300, 310, 320, 330, 340) zum Blockieren eines Ausstoßes von Luft aus dem Bottich (20) durch den Belüftungsabschnitt, wenn eine Schleudertrocknung durchgeführt wird,
wobei das Blockierelement ein Rückschlagventilelement (300) vom Typ mit aktiver Steuerung ist und wobei das Rückschlagventilelement (300) vom Magnettyp ist, das den Belüftungsabschnitt (200) mittels Magnetkraft öffnet oder schließt,
**dadurch gekennzeichnet, dass** das Rückschlagventilelement (300) Folgendes umfasst:
einen Abschnitt (352) zum Bereitstellen einer Magnetkraft, der in dem Belüftungsabschnitt (200) zum Bereitstellen einer Magnetkraft angebracht ist, wenn die Waschmaschine mit Leistung versorgt wird,
eine feststehende Platte (354), die an einer Innenseite des Abschnitts (352) zum Bereitstellen einer Magnetkraft befestigt ist, die ein zentrales Loch aufweist, und
eine bewegliche Platte (356), die unter der feststehenden Platte (354) angebracht ist, um sich nach oben zu bewegen, wenn die Magnetkraft bereitgestellt wird, um das zentrale Loch zu schließen.

2. Waschmaschine nach Anspruch 1, wobei das Blockierelement (300, 310, 320, 330, 340) konfiguriert ist, den Ausstoß zu blockieren, wenn die Trommel (30) eine voreingestellte Drehzahl erreicht.

3. Waschmaschine nach Anspruch 1, wobei das Blockierelement (300, 310, 320, 330, 340) konfiguriert ist, den Ausstoß zu blockieren, wenn ein Innendruck des Bottichs (20) zu dem Zeitpunkt einer Drehung der Trommel (30) mit hoher Drehzahl einen Druck erreicht, der höher als ein voreingestellter Druck ist.

4. Waschmaschine nach Anspruch 1, die ferner einen weiteren Belüftungsabschnitt (201) umfasst, der sich an einer Vorderseite einer Oberseite des Bottichs (20) vor der Öffnung der Trommel (30) befindet, damit Luft in die Trommel (30) strömen kann, wenn die Schleudertrocknung durchgeführt wird.

5. Waschmaschine nach Anspruch 1, wobei das Rückschlagventilelement (300) ferner ein Stoppelement (352a) umfasst, das von einer Unterseite des Abschnitts (352) zum Bereitstellen einer Magnetkraft vorsteht, um die bewegliche Platte (356) zu halten, die sich durch Schwerkraft nach unten bewegt, wenn die Magnetkraft von einer Unterseite der beweglichen Platte (356) ausgeschaltet ist.

6. Waschmaschine nach Anspruch 1, die ferner Folgendes umfasst:
eine Antriebseinheit, die eine drehbare Welle (351), ein Lagergehäuse (400) zum drehbaren Halten der drehbaren Welle (351) und einen Motor zum Drehen der drehbaren Welle (351) umfasst, und
ein biegsames Material (250), um zu verhindern, dass das Wasser in dem Bottich (20) in Richtung der Antriebseinheit ausläuft, und um zu ermöglichen, dass sich die Antriebseinheit in Bezug auf den Bottich (20) bewegen kann.

7. Waschmaschine nach Anspruch 1, die ferner Folgendes umfasst:
eine Antriebseinheit, die eine drehbare Welle (351), ein Lagergehäuse (400) zum drehbaren Halten der drehbaren Welle (351) und einen Motor zum Drehen der drehbaren Welle (351) umfasst, und
eine Aufhängungseinheit, die an dem Lagergehäuse (400) befestigt ist, um Schwingungen der Trommel (30) zu verringern.

## Revendications

1. Machine à laver, comprenant :
un tambour (30) qui possède une ouverture sur une partie frontale de celui-ci pour permettre d'introduire le linge à travers celle-ci ;
une cuve (20) dans laquelle le tambour (30) est agencé en rotation et de l'eau est contenue pour le lavage ;
au moins une partie d'aération (200) sur une surface circonférentielle de la cuve (20) derrière l'ouverture du tambour (30) ; et
un élément de blocage (300, 310, 320, 330, 340) pour bloquer l'évacuation d'air depuis la cuve (20) à travers la partie d'aération lorsqu'un essorage est effectué,
dans laquelle l'élément de blocage inclut un élément de soupape anti-retour (300) de type à commande active, et l'élément de soupape anti-retour (300) est de type magnétique qui ouvre ou ferme la partie d'aération (200) par force magnétique
**caractérisée en ce que** l'élément de soupape anti-retour (300) inclut:
une partie d'alimentation en force magnétique (352) montée dans la partie d'aération (200) pour fournir une force magnétique si le courant est fourni à la machine à laver,
une plaque fixe (354) fixée dans une partie intérieure de la partie d'alimentation en force magnétique (352) qui possède un trou central, et
une plaque mobile (356) montée sous la plaque fixe (354) pour un déplacement vers le haut lorsque la force magnétique est fournie pour fermer le trou central.

2. Machine à laver selon la revendication 1, dans laquelle l'élément de blocage (300, 310, 320, 330, 340) est configuré pour bloquer l'évacuation lorsque le tambour (30) atteint une vitesse de rotation préréglée.

3. Machine à laver selon la revendication 1, dans laquelle l'élément de blocage (300, 310, 320, 330, 340) est configuré pour bloquer l'évacuation lorsqu'une pression intérieure de la cuve (20) atteint une pression qui est supérieure à une pression préréglée au moment d'une rotation à haute vitesse du tambour (30).

4. Machine à laver selon la revendication 1, comprenant en outre une autre partie d'aération (201) située sur un côté frontal d'une face supérieure de la cuve (20) en face de l'ouverture du tambour (30) pour permettre à l'air de s'écouler dans le tambour lorsque l'essorage est effectué.

5. Machine à laver selon la revendication 1, dans laquelle l'élément de clapet anti-retour inclut en outre une butée (352a) en saillie d'une face inférieure de la partie d'alimentation en force magnétique (352) pour soutenir la plaque mobile (356) qui se déplace vers le bas par gravité lorsque la force magnétique est coupée depuis une face inférieure de la plaque mobile (356).

6. Machine à laver selon la revendication 1, comprenant en outre
une unité d'entraînement incluant une tige de rotation (351), un logement de palier (400) pour soutenir en rotation la tige de rotation (351) et un moteur pour faire tourner la tige de rotation (351), et
un matériau flexible (250) pour empêcher que l'eau à l'intérieur de la cuve (20) ne fuie vers l'unité d'entraînement et pour permettre à l'unité d'entraînement de se déplacer par rapport à la cuve (20).

7. Machine à laver selon la revendication 1, comprenant en outre
une unité d'entraînement incluant une tige de rotation (351), un logement de palier (400) pour soutenir en rotation la tige de rotation (351) et un moteur pour faire tourner la tige de rotation (351), et
une unité de suspension attachée au logement de palier (400) pour réduire la vibration du tambour (30).
